# EUROPEAN PATENT APPLICATION

(11) **EP 4 446 169 A1**
(43) Date of publication of application: **16.10.2024**
(21) Application number: 22904186.8
(22) Date of filing: 05.12.2022
(51) Int. Cl.: B60Q 1/14, B60Q 1/08, F21S 41/60

(54) **VEHICLE LAMP CONTROL DEVICE, VEHICLE LAMP CONTROL METHOD AND VEHICLE LAMP SYSTEM**

(30) Priority: 09.12.2021 JP 2021200366
(71) Applicant: Stanley Electric Co. Ltd., Tokyo 153-8636 (JP)
(72) Inventor: HOSHINO Shinya, Tokyo 153-8636 (JP); KITA Yasushi, Tokyo 153-8636 (JP); KIMURA Takako, Tokyo 153-8636 (JP)
(74) Representative: Wimmer, Hubert
(86) International application number: PCT/JP2022/044705
(87) International publication number: WO 2023/106257

(57) **Abstract**

To provide light distribution control technology for a vehicle lamp capable of improving driver visibility.

A vehicle lamp control apparatus that controls light irradiation state of a vehicle lamp capable of irradiating light forward of a vehicle, where the light irradiation state is controlled such that, when a vehicle speed is lower than a reference value, a road surface illuminance due to light from the vehicle lamp at a first forward distance which is close to the vehicle becomes a first value; when the vehicle speed is greater than the reference value, the road surface illuminance due to light from the vehicle lamp at the first forward distance becomes a second value which is smaller than the first value; and the road surface illuminance due to light from the vehicle lamp at a second forward distance which is far from the vehicle becomes substantially constant regardless of the vehicle speed.

## Description

### TECHNICAL FIELD

The present disclosure relates to a vehicle lamp control apparatus, a vehicle lamp control method, and a vehicle lamp system.

### BACKGROUND ART

Japanese Patent No. 6053615 (Patent Document 1) describes a headlight device and a control method thereof that automatically change brightness of a headlight in response to the traveling speed of a vehicle and the ambient illuminance. However, since the brightness of the entire light distribution from the headlight is increased or decreased, there is room for improvement in that visibility for the driver may not necessarily improve depending on the situation.

### PRIOR ART DOCUMENT

### PATENT DOCUMENT

[Patent Document 1] Japanese Patent No. 6053615

### SUMMARY OF THE INVENTION

### TECHNICAL PROBLEM

In a specific aspect, it is an object of the present disclosure to provide light distribution control technology for a vehicle lamp capable of further improving driver visibility.

### SOLUTION TO THE PROBLEM

(1) A vehicle lamp control apparatus according to one aspect of the present disclosure is (a) a vehicle lamp control apparatus that controls light irradiation state of a vehicle lamp which is capable of irradiating light forward of a vehicle, where the light irradiation state by the vehicle lamp is controlled such that, (b) when a vehicle speed of the vehicle is lower than or equal to a reference value, a road surface illuminance due to light from the vehicle lamp at a position at a first forward distance which is relatively close to the vehicle becomes a first value; when the vehicle speed of the vehicle is greater than the reference value, the road surface illuminance due to light from the vehicle lamp at the position at the first forward distance becomes a second value which is smaller than the first value; and the road surface illuminance due to light from the vehicle lamp at a position at a second forward distance which is relatively far from the vehicle becomes substantially constant regardless of the vehicle speed.
(2) A vehicle lamp control apparatus according to one aspect of the present disclosure is (a) a vehicle lamp control apparatus that controls light irradiation state of a vehicle lamp which is capable of irradiating light forward of a vehicle including: (b) an irradiation pattern setting unit that sets an irradiation pattern of light from the vehicle lamp according to a vehicle speed of the vehicle; and (c) a control signal generation unit that generates a control signal based on the irradiation pattern set by the irradiation pattern setting unit and supplies the control signal to the vehicle lamp; (d) where the irradiation pattern setting unit sets the irradiation pattern such that, when the vehicle speed of the vehicle is lower than or equal to a first reference value, a road surface illuminance due to light from the vehicle lamp at a first forward distance which is relatively close to the vehicle becomes a first value; when the vehicle speed of the vehicle is greater than the first reference value, the road surface illuminance due to light from the vehicle lamp at the position at the first forward distance becomes a second value which is smaller than the first value; and the road surface illuminance due to light from the vehicle lamp at a position at a second forward distance which is relatively far from the vehicle becomes substantially constant regardless of the vehicle speed.
(3) A vehicle lamp control method according to one aspect of the present disclosure is a control method that controls light irradiation state of a vehicle lamp which is capable of irradiating light forward of a vehicle, where the vehicle lamp control method includes : (a) when a vehicle speed of the vehicle is lower than or equal to a reference value, setting brightness of a light of the vehicle lamp such that a road surface illuminance due to light from the vehicle lamp at a position at a first forward distance which is relatively close to the vehicle becomes a first value; (b) when the vehicle speed of the vehicle is greater than the reference value, setting brightness of the light of the vehicle lamp such that the road surface illuminance due to light from the vehicle lamp at the position at the first forward distance becomes a second value which is smaller than the first value; and (c) setting brightness of the light of the vehicle lamp such that the road surface illuminance due to light from the vehicle lamp at a position at a second forward distance which is relatively far from the vehicle becomes substantially constant regardless of the vehicle speed. (4) A vehicle lamp system according to one aspect of the present disclosure is a vehicle lamp system that includes the control apparatus according to the above-described (1) or (2), and a vehicle lamp connected to the control apparatus.

According to the above configurations, light distribution control technology for a vehicle lamp capable of further improving driver visibility can be obtained.

### BRIEF DESCRIPTION OF THE DRAWINGS

FIG. 1 is a block diagram showing the configuration of a vehicle lamp system according to one embodiment.
FIG. 2 is a diagram showing an example of the configuration of a computer system that realizes a controller.
FIG. 3A is a graph showing a control mode of irradiation light in front of the own vehicle.
FIG. 3B is a diagram showing a numerical example of the road surface illuminance due to irradiation light at each measurement position on the road surface.
FIG. 4 is a diagram for explaining forward distance.
FIG. 5A is a diagram showing a configuration example of irradiation light formed by a headlamp.
FIG. 5B is a diagram showing a configuration of irradiation light of a modified working embodiment.
FIG. 6 is a flowchart showing an operating procedure of a controller in a vehicle lamp system.
FIG. 7A is a diagram showing a control mode of irradiation light by the vehicle lamp system of the present embodiment.
FIG. 7B is a diagram showing a control mode of irradiated light by a vehicle lamp system of a comparative example.
FIG. 8A is a graph showing a control mode of irradiation light in front of the own vehicle according to another embodiment.
FIG. 8B is a diagram showing a numerical example of the road surface illuminance due to irradiation light at each measurement position on the road surface according to another embodiment.
FIG. 9 is a flowchart showing operation procedure of a controller in a vehicle lamp system of another embodiment.

### MODE FOR CARRYING OUT THE INVENTION

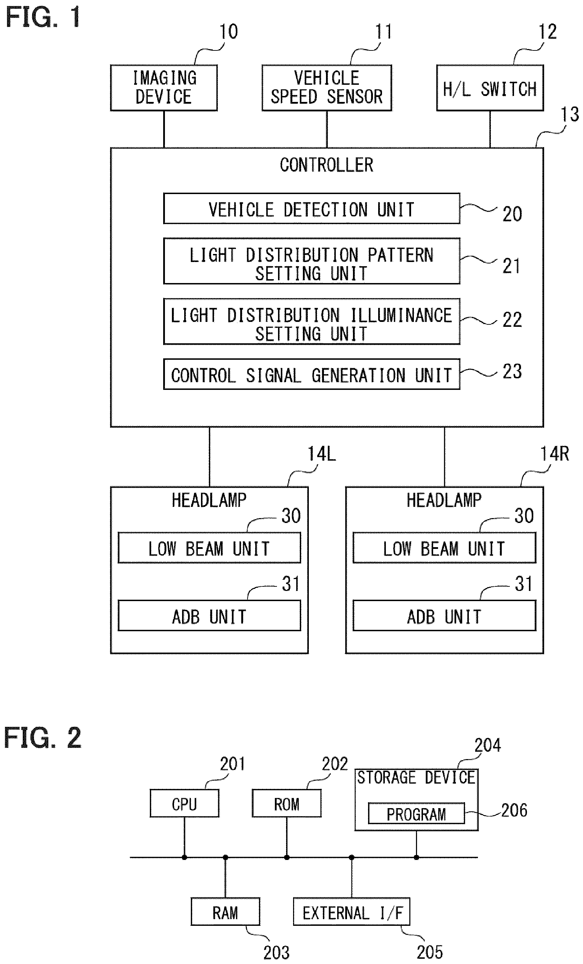

FIG. 1 is a block diagram showing the configuration of a vehicle lamp system according to one embodiment. The illustrated vehicle lamp system is configured to include an imaging device 10, a vehicle speed sensor 11, a headlamp (H/L) switch 12, a controller (control device) 13, and a pair of headlamps 14L and 14R.

The imaging device 10 photographs the space in front of the own vehicle and generates an image thereof. Further, the imaging device 10 detects feature points of the oncoming vehicle (in the present embodiment, the position of the headlamps of the oncoming vehicle), etc. by performing predetermined image recognition processing on the image obtained by photographing. This imaging device 10 is installed above the inside of the windshield of the own vehicle, for example. The imaging device 10 is configured to include a camera that generates an image, and an image processing processor that performs image recognition processing on the image, for example.

The vehicle speed sensor 11 detects the vehicle speed of the own vehicle. Generally, since a vehicle is often equipped with a vehicle speed sensor as a standard feature, this vehicle speed sensor can be used as the vehicle speed sensor 11.

The headlamp switch 12 is provided near the steering wheel on the driver's seat side, for example, and is used to turn on and off the headlamps 14L and 14R according to the operation by the driver.

The controller 13 controls the operation of the pair of headlamps 14L and 14R. The controller 13 includes a vehicle detection unit 20, a light distribution pattern setting unit 21, a light distribution illuminance setting unit 22, and a control signal generation unit 23 as functional blocks. The controller 13 is realized by using a computer system having a CPU (Central Processing Unit), a ROM (Read Only Memory), a RAM (Random Access Memory), etc., for example, and by executing a predetermined operating program in this computer system.

The vehicle detection unit 20 detects the presence or absence of an oncoming vehicle or the like based on the data output from the imaging device 10, and when an oncoming vehicle or the like exists, detects a value representing the position thereof. The oncoming vehicle or the like here include, for example, an oncoming vehicle, a preceding vehicle, and a pedestrian, etc.

The light distribution pattern setting unit 21 sets a light distribution pattern for a high beam irradiation range, in which the position of the oncoming vehicle or the like detected by the vehicle detection unit 20 is set as a light dimming range (or a light shielding range) and the other range is set as the light irradiation range.

The light distribution illuminance setting unit (irradiation pattern setting unit) 22 variably sets the brightness (for example, luminous intensity or luminance) of the irradiation light formed by each headlamp 14L, 14R according to the vehicle speed of the own vehicle detected by the vehicle speed sensor 11. Thereby, the road surface illuminance by the irradiation light from each headlamp 14L, 14R is variably set.

The control signal generation unit 23 generates a control signal corresponding to the brightness of the irradiation light set by the light distribution illuminance setting unit 22, and supplies it to the low beam unit 30 of each headlamp 14L, 14R. Further, the control signal generation unit 23 generates a control signal corresponding to the light distribution pattern set by the light distribution pattern setting unit 21 and supplies it to the ADB unit 31 of each headlamp 14L, 14R.

The headlamps 14L and 14R are provided one each on the left and right sides of the front of the vehicle, and are used to irradiate light to the front of the vehicle. Each headlamp 14L, 14R has a low beam unit 30 and an ADB unit 31, respectively.

The low beam unit 30 includes a light source bulb and a reflector, for example, and operates in response to a control signal from the controller 13, causes to reflect light emitted from the light source bulb by the reflector and to block a part of the reflected light by a light shielding plate, thereby, generates light for forming a low beam that mainly irradiates a region relatively close to the own vehicle. In the present embodiment, brightness of the light emitted from the light source bulb of the low beam unit 30 is set by the light distribution illuminance setting unit 22, and a control signal corresponding to the brightness is supplied from the control signal generating unit 23 to the low beam unit 30, thereby, the brightness of the low beam is variably set. Here, a light source such as an LED may be used instead of the light source bulb.

The ADB (Adaptive Driving Beam) unit 31 operates upon receiving a control signal from the controller 13, and generates light for forming a high beam that mainly irradiates a region relatively far from the own vehicle. The high beam of the present embodiment is variably set, depending on the position of the oncoming vehicle or the like, such that it becomes a light dimming range (or a light non-irradiation range) for the range where the oncoming vehicle or the like exist and a light irradiation range for the other range. As such ADB unit 31, various types of publicly known ADB units can be used, such as an ADB unit that uses a liquid crystal element to control the light dimming range and the light irradiation range, an ADB unit that controls the light dimming range and the light irradiation range by arranging multiple LEDs and selectively turning on and off the LEDs, or an ADB unit that scans light from a laser element with a movable reflector and controls the light dimming range and the light irradiation range by turning the laser element on and off at high speed, or the like.

FIG. 2 is a diagram showing an example of the configuration of a computer system that realizes the controller. The illustrated computer system is configured to include a CPU 201, a ROM 202, a RAM 203, a storage device 204, and an external interface (I/F) 205 that are communicably connected to each other. The CPU 201 operates based on a basic control program read from the ROM 202 and realizes the functions of the controller 13 described above by reading and executing a program (application program) 206 stored in the storage device 204. The RAM 203 temporarily stores data used when the CPU 201 operates. The storage device 204 is a nonvolatile data storage device such as a hard disk drive or SSD (Solid State Drive) and stores various data such as the program 206. The external interface 205 is an interface that connects the CPU 201 and an external device. In the present embodiment, this is used to connect each of the imaging device 10, vehicle speed sensor 11, and headlamp switch 12 to the CPU 201.

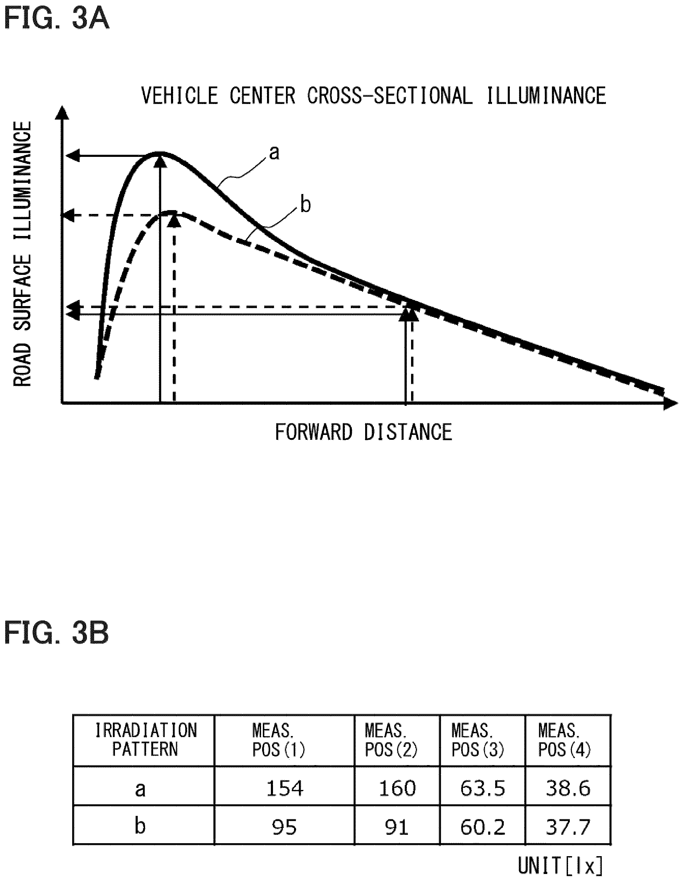

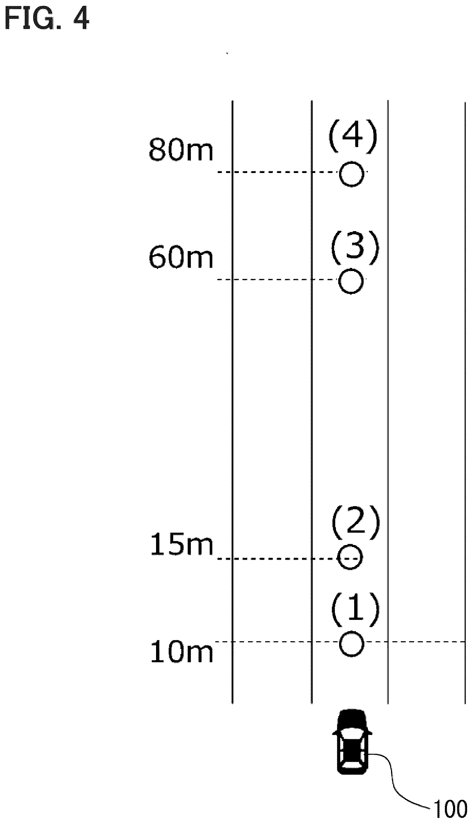

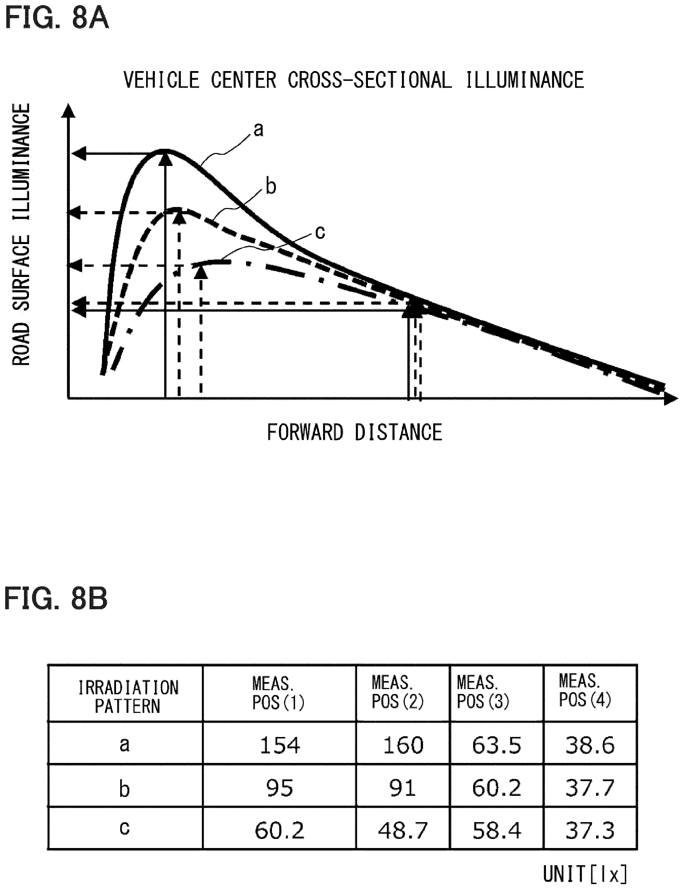

FIG. 3A is a graph showing a control mode of irradiation light in front of the own vehicle. Horizontal axis corresponds to forward distance based on the position of the own vehicle, and vertical axis corresponds to illuminance of the road surface (road surface illuminance) . Here, as shown in FIG. 4, note that the forward distance is the distance from the approximate center in the width direction of the own vehicle 100 to the traveling direction. Measurement position (1) in the figure shows a forward distance of 10 m, measurement position (2) shows a forward distance of 15 m, measurement position (3) shows a forward distance of 60 m, and measurement position (4) shows a forward distance of 80 m. Further, FIG. 3B is a diagram showing a numerical example of the road surface illuminance due to irradiation light at each measurement position ("measurement position" abbreviated as "MEAS.POS" in FIG. 3B and FIG. 8B) on the road surface.

Irradiation pattern "a" shown in FIG. 3A is an irradiation pattern in which the vehicle speed of the own vehicle is lower than or equal to a predetermined reference value (for example, 60 km/h) . Further, irradiation pattern "b" shown in FIG. 3A is an irradiation pattern in which the vehicle speed of the own vehicle is greater than the predetermined reference value (for example, 60 km/h) . As shown in the figure, in irradiation pattern "b" in which the vehicle speed is greater than the predetermined reference value, compared to irradiation pattern "a", the road surface illuminance at a range close to the own vehicle is relatively lower, and the road surface illuminance at a range far from the own vehicle is equivalent to (is substantially the same as) irradiation pattern "a".

In the numerical example shown in Fig. 3B, at a forward distance of 10 m, the road surface illuminance of irradiation pattern "a" is 154 lux while the road surface illuminance of irradiation pattern "b" is 95 lux, and at a forward distance of 15 m, the road surface illuminance of irradiation pattern "a" is 160 lux while the road surface illuminance of irradiation pattern "b" is 91 lux. That is, the road surface illuminance of irradiation pattern "b" is significantly decreased compared to the road surface illuminance of irradiation pattern "a". It is desirable that, on the basis of the road surface illuminance of irradiation pattern "a", the road surface illuminance of irradiation pattern "b" is caused to decrease to 50% to 70%.

On the contrary, at a forward distance of 60 m, the road surface illuminance of irradiation pattern "a" is 63.5 lux while the road surface illuminance of irradiation pattern "b" is 60.2 lux, and at a forward distance of 80 m, the road surface illuminance of irradiation pattern "a" is 38.6 lux while the road surface illuminance of irradiation pattern "b" is 37.7 lux. That is, the road surface illuminance of irradiation pattern "b" is approximately equivalent to the road surface illuminance of irradiation pattern "a". In other words, the road illuminance of irradiation pattern "b" is substantially the same as the road illuminance of irradiation pattern "a" within a range of ±10%.

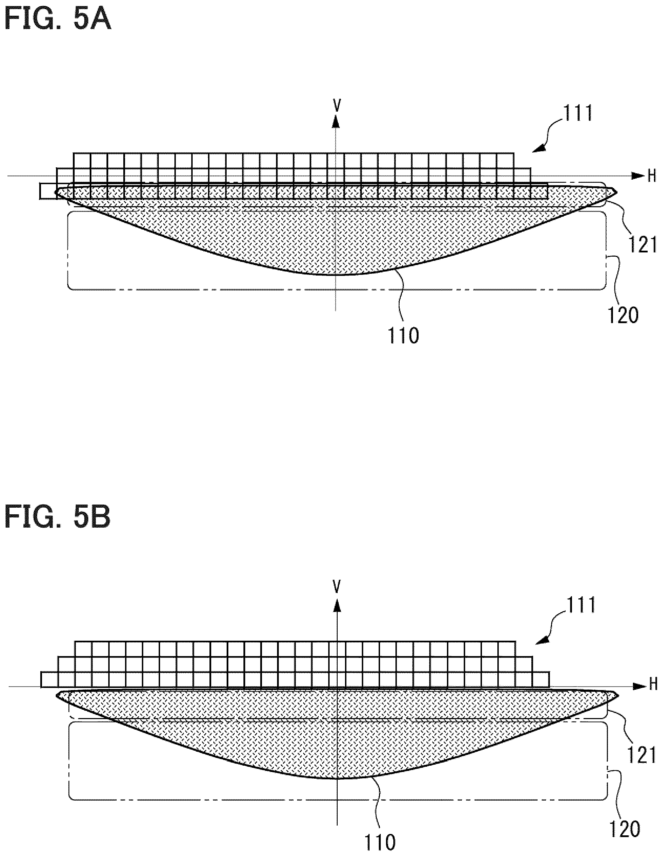

FIG. 5A is a diagram showing a configuration example of irradiation light formed by a headlamp. Here, an example of a light distribution on a virtual screen assumed in a vertical direction in front of the own vehicle is shown. Irradiation light 110 shown in a pattern below the H line in the diagram is a low beam formed by the low beam unit 30. Further, irradiation light 111 formed in three rows by arranging a plurality of segments (rectangular regions) above the H line is a high beam formed by the ADB unit 31, and each segment is a region in which irradiation and dimming (or non-irradiation) can be switched individually.

In the diagram, region 120 shown by a chain double-dashed line a little apart from line H and below the line H indicates a region corresponding to light irradiated in front of the own vehicle at a forward distance of 15 m. Further, region 121 indicated by a one-dot chain line between the H line and region 120 indicates a region where a part of the light irradiated by the low beam unit 30 and a part of the light irradiated by the ADB unit 31 overlap. As shown in the diagram, the light irradiated by the low beam unit 30 of the present embodiment has some portions that are irradiated farther than the forward distance of 15 m, therefore, when the brightness of the light irradiated by the low beam unit 30 is caused to decrease in order to decrease the illuminance of region 120, the illuminance of region 121 will also decrease. In order to compensate for the decrease in illuminance in this region 121, in the present embodiment, the irradiation light 111 by the ADB unit 31 is formed at each segment of the row arranged at a position lower than the H line. Thereby, it is possible to prevent illuminance decrease of irradiation light at a position where the forward distance is far (in this example, a forward distance of 15 m or more).

Here, as the irradiation light of a modified working embodiment shown in FIG. 5B, the low beam unit 30 can be configured such that region 120 which is within a forward distance of 15 m and region 121 which is greater than a forward distance of 15 m are respectively and individually turned on and off. In this case, by controlling the irradiation light in region 120, irradiation patterns "a" and "b" shown in FIG. 3A described above can be realized. Further, in this case, a part of the irradiation light by the ADB unit 31 does not need to overlap region 121 as shown in the diagram.

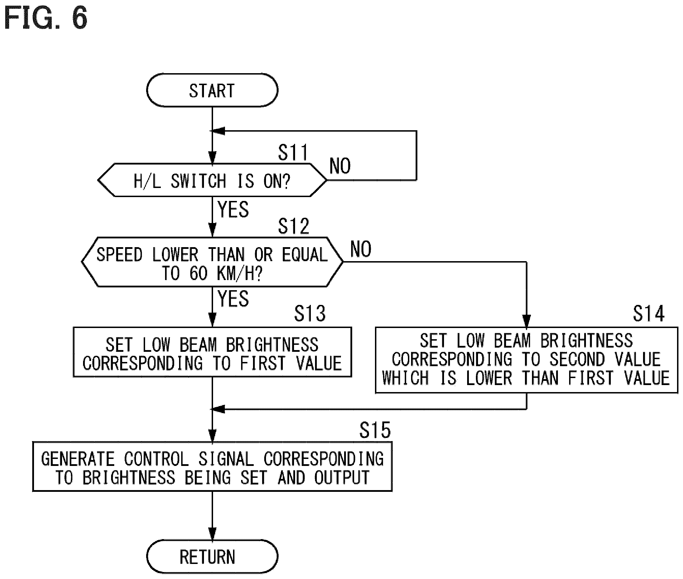

FIG. 6 is a flowchart showing an operating procedure of a controller in a vehicle lamp system. The operation of the vehicle lamp system will be described below with reference to this flowchart. Here, note that the illustrated processing may be performed in any order as long as there is no inconsistency or contradiction in the results of the information processing, and other processing not shown may be added, and such operational modes are not excluded. Further, although the following description is based on the control mode of the irradiation pattern shown in FIG. 5A, the same applies to the irradiation pattern shown in FIG. 5B.

When the headlamp switch 12 is switched from the off state (step S11; NO) to the on state (step S11; YES) and the vehicle speed detected by the vehicle speed sensor 11 is lower than or equal to 60 km/h (Step S12; YES), the light distribution illuminance setting unit 22 sets the brightness of irradiation light emitted by the low beam unit 30 so that the road surface illuminance becomes a first value (Step S13). The first value here is a value corresponding to irradiation pattern "a" shown in FIG. 5A described above.

Further, when the vehicle speed detected by the vehicle speed sensor 11 is greater than 60 km/h (step S12; NO), the light distribution illuminance setting unit 22 sets the brightness of the light emitted by the low beam unit 30 so that the road surface illuminance becomes a second value which is lower than the first value (step S14). The second value here is a value corresponding to irradiation pattern "b" shown in FIG. 5A described above.

Here, when setting to irradiation pattern "b", as described above, the brightness of the irradiation light at the lowest row of the high beam irradiation range by the ADB unit 31 is set to increase by the light distribution illuminance setting unit 22. As a result, in irradiation pattern "b", compared to irradiation pattern "a", brightness of irradiation light to a range where forward distance is relatively short (in the present embodiment, a range within 15 m) is decreased while brightness of irradiation light to a range where forward distance is relatively far (in this embodiment, a range greater than 15 m) is maintained.

When brightness of irradiation light is set by the light distribution illuminance setting unit 22, the control signal generation unit 23 generates a control signal for realizing the brightness and outputs it to each vehicle lamp 14L, 14R (step S15) . Thereby, irradiation light that can realize road surface illuminance corresponding to irradiation pattern "a" or irradiation pattern "b" is formed in front of the own vehicle. Thereafter, the process returns to step S11.

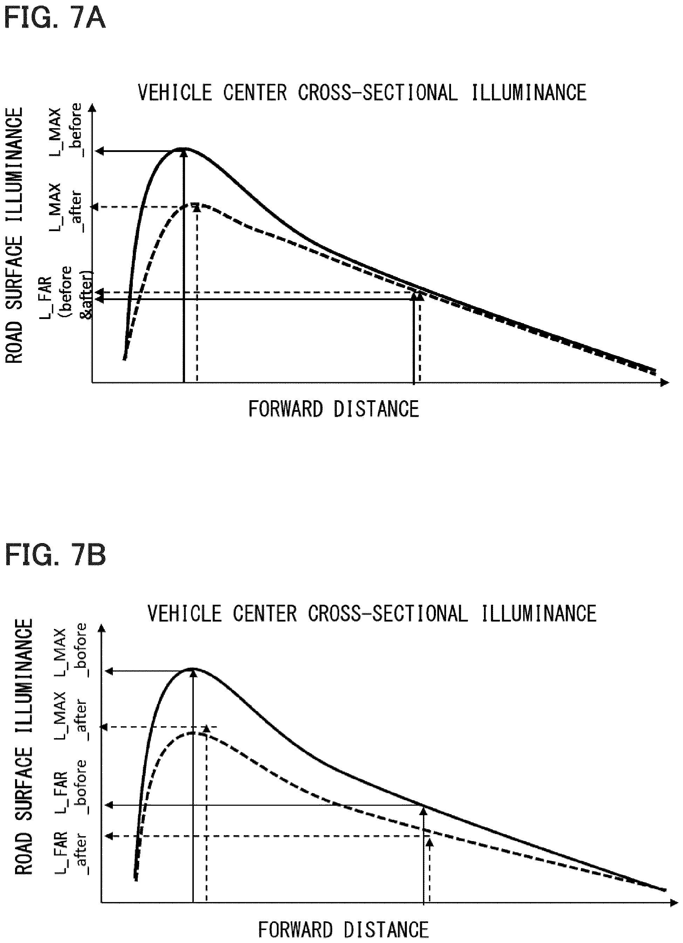

FIG. 7A is a diagram showing a control mode of irradiation light by the vehicle lamp system of the present embodiment. FIG. 7B is a diagram showing a control mode of irradiated light by a vehicle lamp system of a comparative example. In each figure, horizontal axis corresponds to forward distance with respect to the position of the own vehicle, and vertical axis corresponds to road surface illuminance. As shown in FIG. 7A, in the vehicle lighting system according to the present embodiment, when vehicle speed is lower than or equal to a predetermined standard, as shown by a solid line, the road surface illuminance reaches its maximum value (indicated as "L_MAX_before" in the figure) near a forward distance of 15 m of the own vehicle, and gradually decreases as the forward distance increases. Further, when the vehicle speed is greater than the predetermined standard, as shown by a dotted line, the road surface illuminance reaches its maximum value (indicated as "L_MAX_after" in the figure) near a forward distance of 15 m of the own vehicle, and gradually decreases as the forward distance increases. Here, road surface illuminance "L_MAX_after" has a relatively lower value than road illuminance "L_MAX_before" whereas when the forward distance range is 60 m or more, the road surface illuminance is almost the same regardless of the vehicle speed. The road surface illuminance at this forward distance range is shown as "L_FAR_before&after" in the figure.

In this way, when the vehicle speed increases, the road surface illuminance decreases in the range relatively close to the own vehicle while the road surface illuminance does not change in the range relatively far from the own vehicle. Thus, this has an effect that a driver's gaze point is less likely to be drawn to a position close to the own vehicle, and the driver's gaze point is more likely to be directed toward a distant position that the driver would originally like to gaze at. As a result, this gives the driver a greater sense of security and the driver can obtain better visibility of what is ahead. On the contrary, in the comparative example shown in FIG. 7B, since road surface illuminance caused by the irradiation light is decreased overall in accordance with the vehicle speed, the difference between the road surface illuminance "L_FAR_before" and the road surface illuminance "L_FAR_after" becomes greater, thereby, it can be said that the visibility at a distance is inferior to that of the present embodiment.

Incidentally, in the embodiment described above, one reference value of a vehicle speed is defined and an irradiation pattern is switched using that reference value as a boundary, however it is also possible to define two reference values and switch the irradiation pattern using each as a boundary. According to such an embodiment, the irradiation pattern can be switched more precisely in accordance with the vehicle speed, and can contribute to improving the driver's visibility of what is ahead (especially at a distance). An embodiment in such a case will be described hereinafter. Here, since the configuration of the vehicle lamp system remains unchanged and is similar to the embodiment described above, the control mode will be described in detail.

FIG. 8A is a graph showing a control mode of irradiation light in front of the own vehicle according to another embodiment. Horizontal axis corresponds to forward distance based on the position of the own vehicle, and vertical axis corresponds to road surface illuminance. Further, FIG. 8B is a diagram showing a numerical example of the road surface illuminance due to irradiation light at each measurement position on the road surface according to another embodiment.

Irradiation pattern "a" shown in FIG. 8A is an irradiation pattern when the vehicle speed of the own vehicle is less than or equal to a predetermined first reference value (for example, 20 km/h). Further, irradiation pattern "b" is an irradiation pattern when the vehicle speed of the own vehicle is greater than the first reference value and less than or equal to a second reference value (for example, 60 km/h). Further, irradiation pattern "c" is an irradiation pattern when the vehicle speed of the own vehicle is greater than the second reference value. As shown in the figure, compared to irradiation pattern "a", irradiation pattern "b" has a lower road surface illuminance in a range relatively close to the own vehicle and is equivalent to (almost the same as) irradiation pattern "a" in a range relatively far from the own vehicle. Similarly, in irradiation pattern "c", compared to irradiation patterns "a" and "b", the road surface illuminance is lower in a range relatively close to the own vehicle and is equivalent to (almost the same as) irradiation patterns "a" and "b" in a range relatively far from the own vehicle.

With regard to the numerical example shown in FIG. 8B, at a forward distance of 10 m, the road surface illuminance of irradiation pattern "a" is 154 lux while the road surface illuminance of irradiation pattern "b" is 95 lux and the road surface illuminance of irradiation pattern "c" is 60.2 lux. At a forward distance of 15 m, the road surface illuminance of irradiation pattern "a" is 160 lux while the road surface illuminance of irradiation pattern "b" is 91 lux and the road surface illuminance of irradiation pattern "c" is 48.7 lux. That is, the road surface illuminance of irradiation pattern "b" is significantly decreased compared to that of irradiation pattern "a". It is desirable that, on the basis of the road surface illuminance of irradiation pattern "a", the road surface illuminance of irradiation pattern "b" is caused to decrease to 50% to 70%. Further, the road surface illuminance of irradiation pattern "c" is more significantly decreased compared to the road surface illuminance of irradiation pattern "a". It is desirable that, on the basis of the road surface illuminance of irradiation pattern "a", the road surface illuminance of irradiation pattern "c" is caused to decrease to 30% to 40%.

On the contrary, at a forward distance of 60 m, the road surface illuminance of irradiation pattern "a" is 63.5 lux while the road surface illuminance of irradiation pattern "b" is 60.2 lux and the road surface illuminance of irradiation pattern "c" is 58.4 lux. At a forward distance of 80 m, the road surface illuminance of irradiation pattern "a" is 38.6 lux while the road surface illuminance of irradiation pattern "b" is 37.7 lux and the road surface illuminance of irradiation pattern "c" is 37.3 lux. That is, the road surface illuminance of irradiation pattern "b" is almost equivalent to (almost the same as) the road surface illuminance of irradiation pattern "a". In detail, at the forward distance of 60 m, the road surface illuminance of irradiation patterns "b" and "c" are approximately the same as the road surface illuminance of irradiation pattern "a" within a range of ±10%. Further, at the forward distance of 80 m, the road surface illuminance of irradiation patterns "b" and "c" are approximately the same as the road surface illuminance of irradiation pattern "a" within a range of ±5%.

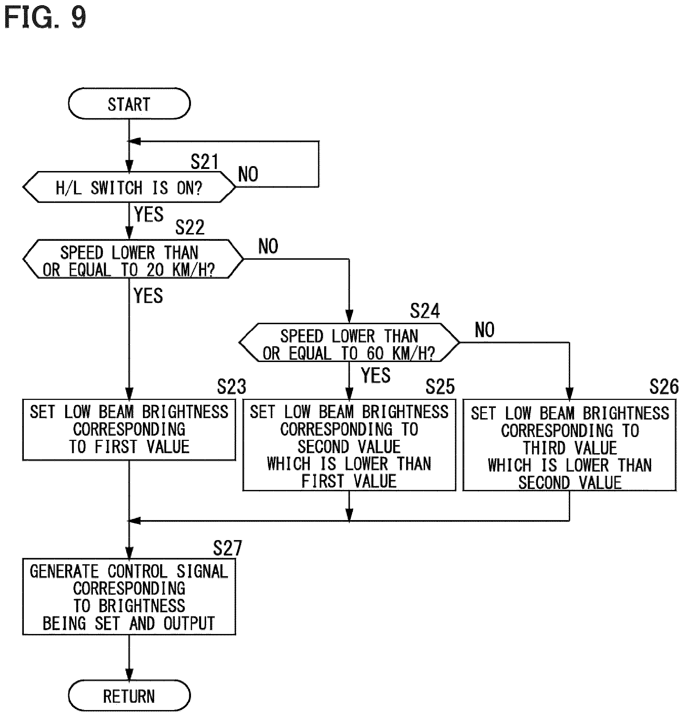

FIG. 9 is a flowchart showing operation procedure of a controller in a vehicle lamp system of another embodiment. The operation of the vehicle lamp system will be described below with reference to this flowchart. Here, note that the illustrated processing may be performed in any order as long as there is no inconsistency or contradiction in the results of the information processing, and other processing not shown may be added, and such operational modes are not excluded. Further, to facilitate easier understanding, the following description is based on the control mode of the irradiation pattern shown in FIG. 5A described above.

When the headlamp switch 12 is switched from the off state (step S21; NO) to the on state (step S21; YES) and the vehicle speed detected by the vehicle speed sensor 11 is lower than or equal to 20 km/h (Step S22; YES), the light distribution illuminance setting unit 22 sets the brightness of irradiation light emitted by the low beam unit 30 so that the road surface illuminance becomes a first value (Step S23). The first value here is a value corresponding to irradiation pattern "a" shown in FIG. 8A described above.

Further, when the vehicle speed detected by the vehicle speed sensor 11 is greater than 20 km/h (Step S22; NO) and is less than or equal to 60 km/h (step S24; YES), the light distribution illuminance setting unit 22 sets the brightness of irradiation light emitted by the low beam unit 30 so that the road surface illuminance becomes a second value which is lower than the first value (step S25). The second value here is a value corresponding to irradiation pattern "b" shown in FIG. 8A described above.

Further, when the vehicle speed detected by the vehicle speed sensor 11 is greater than 60 km/h (step S24; NO), the light distribution illuminance setting unit 22 sets the brightness of irradiation light emitted by the low beam unit 30 so that the road surface illuminance becomes a third value which is lower than the second value (step S26) . The third value here is a value corresponding to irradiation pattern "c" shown in FIG. 8A described above.

Here, when setting to irradiation pattern "b", as described above, the brightness of the irradiation light at the lowest low of the high beam irradiation range by the ADB unit 31 is set to increase by the light distribution illuminance setting unit 22. As a result, in irradiation pattern "b", compared to irradiation pattern "a", brightness of irradiation light to a range where forward distance is relatively short (in the present embodiment, a range within 15 m) is decreased while brightness of irradiation light to a range where forward distance is relatively far (in this embodiment, a range greater than 15 m) is maintained.

When brightness of irradiation light is set by the light distribution illuminance setting unit 22, the control signal generation unit 23 generates a control signal for realizing the brightness and outputs it to each vehicle lamp 14L, 14R (step S27). Thereby, irradiation light that can realize road surface illuminance corresponding to any of the irradiation patterns "a" to "c" is formed in front of the own vehicle. Thereafter, the process returns to step S21.

According to each of the embodiments described above, light distribution control technology for a vehicle lamp capable of further improving driver visibility can be obtained.

Here, the present disclosure is not limited to the content of the embodiments described above, and can be implemented with various modifications within the scope of the gist of the present disclosure. For example, in each of the above-described embodiments, there has been no particular description of time required for the state change when increasing or decreasing road surface illuminance by the irradiation light at a range relatively close to the own vehicle depending on the vehicle speed. However, the brightness of the irradiation light may be increased or decreased instantaneously or may be increased or decreased gradually over a certain amount of time. In such a case, for example, it may be possible to perform a control so as to increase the brightness instantly and decrease the brightness gradually, or conversely, increase the brightness gradually and decrease the brightness instantly.

Further, in each of the above-described embodiments, the low beam unit and the ADB unit are configured separately, but they may be configured integrally. In such a case, similar to the formation of a high beam, it is also preferable to perform a low beam formation using a unit that uses the above-descried liquid crystal element, a unit that uses multiple LEDs, or a unit that scans light from a laser element by a movable reflector.

Furthermore, in the above-described embodiments, cases have been exemplified in which selective light irradiation is performed in a high beam irradiation range according to the positions of a froward vehicle or the like, however, such control is not essential. The contents of the present disclosure can also be applied to a type of a vehicle lamp that forms irradiation light by a simple combination of a low beam and a high beam.

### REFERENCE SIGNS LIST

- 10:: Imaging device
- 11:: Vehicle speed sensor
- 12:: Headlamp switch
- 13:: Controller
- 14L, 14R:: Headlamp

- 20:: Vehicle detection unit
- 21:: Light distribution pattern setting unit
- 22:: Light distribution illuminance setting unit
- 23:: Control signal generation unit
- 30:: Low beam unit
- 31:: ADB unit

## Claims

1. A vehicle lamp control apparatus that controls light irradiation state of a vehicle lamp which is capable of irradiating light forward of a vehicle,
wherein the light irradiation state by the vehicle lamp is controlled such that, when a vehicle speed of the vehicle is lower than or equal to a reference value, a road surface illuminance due to light from the vehicle lamp at a position at a first forward distance which is relatively close to the vehicle becomes a first value; when the vehicle speed of the vehicle is greater than the reference value, the road surface illuminance due to light from the vehicle lamp at the position at the first forward distance becomes a second value which is smaller than the first value; and the road surface illuminance due to light from the vehicle lamp at a position at a second forward distance which is relatively far from the vehicle becomes substantially constant regardless of the vehicle speed.

2. A vehicle lamp control apparatus that controls light irradiation state of a vehicle lamp which is capable of irradiating light forward of a vehicle comprising:
an irradiation pattern setting unit that sets an irradiation pattern of light from the vehicle lamp according to a vehicle speed of the vehicle; and
a control signal generation unit that generates a control signal based on the irradiation pattern set by the irradiation pattern setting unit and supplies the control signal to the vehicle lamp;
wherein the irradiation pattern setting unit sets the irradiation pattern such that, when the vehicle speed of the vehicle is equal to or less than a first reference value, a road surface illuminance due to light from the vehicle lamp at a first forward distance which is relatively close to the vehicle becomes a first value; when the vehicle speed of the vehicle is greater than the first reference value, the road surface illuminance due to light from the vehicle lamp at the position at the first forward distance becomes a second value which is smaller than the first value; and the road surface illuminance due to light from the vehicle lamp at a position at a second forward distance which is relatively far from the vehicle becomes substantially constant regardless of the vehicle speed.

3. The vehicle lamp control apparatus according to claim 2,
wherein the irradiation pattern setting unit sets the irradiation pattern such that, when the vehicle speed of the vehicle is equal to or less than a second reference value which is greater than the first reference value, the road surface illuminance at the position of the first forward distance becomes the second value; and when the vehicle speed of the vehicle is greater than the second reference value, the road surface illuminance at the position of the first forward distance becomes a third value which is smaller than the second value.

4. The vehicle lamp control apparatus according to any one of claims 1 to 3,
wherein the road surface illuminance at the position at the second forward distance is approximately constant within a range of ±5% to ±10%.

5. The vehicle lamp control apparatus according to any one of claims 1 to 4,
wherein the second value of the road surface illuminance is a value of 50% or more and 70% or less on the basis of the first value.

6. The vehicle lamp control apparatus according to any one of claims 1 to 5,
wherein the third value of the road surface illuminance is a value of 30% or more and 40% or less on the basis of the first value.

7. The vehicle lamp control apparatus according to any one of claims 1 to 6,
wherein the first forward distance is set within a range of 10 m to 15 m and the second forward distance is set within a range of 60 m to 80 m.

8. The vehicle lamp control apparatus according to any one of claims 1 to 7,
wherein the first reference value is set to 20 km/h and the second reference value is set to 60 km/h.

9. A vehicle lamp control method that controls light irradiation state of a vehicle lamp which is capable of irradiating light forward of a vehicle,
wherein the vehicle lamp control method comprises:
(a) when a vehicle speed of the vehicle is lower than or equal to a reference value, setting brightness of a light of the vehicle lamp such that a road surface illuminance due to light from the vehicle lamp at a position at a first forward distance which is relatively close to the vehicle becomes a first value;
(b) when the vehicle speed of the vehicle is greater than the reference value, setting brightness of the light of the vehicle lamp such that the road surface illuminance due to light from the vehicle lamp at the position at the first forward distance becomes a second value which is smaller than the first value; and
(c) setting brightness of the light of the vehicle lamp such that the road surface illuminance due to light from the vehicle lamp at a position at a second forward distance which is relatively far from the vehicle becomes substantially constant regardless of the vehicle speed.

10. A vehicle lamp system that comprises the control apparatus according to any one of claims 1 to 8 and a vehicle lamp connected to the control apparatus.

## Amended claims

### Amended claims under Art. 19.1 PCT

1. A vehicle lamp control apparatus that controls light irradiation state of a vehicle lamp which is capable of irradiating light forward of a vehicle,
wherein the light irradiation state by the vehicle lamp is controlled such that, with regard to irradiation light lower than an H line on a virtual screen, when a vehicle speed of the vehicle is lower than or equal to a reference value, a road surface illuminance due to light from the vehicle lamp at a position at a first forward distance which is relatively close to the vehicle becomes a first value; when the vehicle speed of the vehicle is greater than the reference value, the road surface illuminance due to light from the vehicle lamp at the position at the first forward distance becomes a second value which is smaller than the first value; and the road surface illuminance due to light from the vehicle lamp at a position at a second forward distance which is relatively far from the vehicle becomes substantially constant regardless of the vehicle speed.

2. A vehicle lamp control apparatus that controls light irradiation state of a vehicle lamp which is capable of irradiating light forward of a vehicle comprising:
an irradiation pattern setting unit that sets an irradiation pattern of light from the vehicle lamp according to a vehicle speed of the vehicle; and
a control signal generation unit that generates a control signal based on the irradiation pattern set by the irradiation pattern setting unit and supplies the control signal to the vehicle lamp;
wherein the irradiation pattern setting unit sets the irradiation pattern such that, with regard to irradiation light lower than an H line on a virtual screen, when the vehicle speed of the vehicle is equal to or less than a first reference value, a road surface illuminance due to light from the vehicle lamp at a first forward distance which is relatively close to the vehicle becomes a first value; when the vehicle speed of the vehicle is greater than the first reference value, the road surface illuminance due to light from the vehicle lamp at the position at the first forward distance becomes a second value which is smaller than the first value; and the road surface illuminance due to light from the vehicle lamp at a position at a second forward distance which is relatively far from the vehicle becomes substantially constant regardless of the vehicle speed.

3. The vehicle lamp control apparatus according to claim 2,
wherein the irradiation pattern setting unit sets the irradiation pattern such that, when the vehicle speed of the vehicle is equal to or less than a second reference value which is greater than the first reference value, the road surface illuminance at the position of the first forward distance becomes the second value; and when the vehicle speed of the vehicle is greater than the second reference value, the road surface illuminance at the position of the first forward distance becomes a third value which is smaller than the second value.

4. The vehicle lamp control apparatus according to any one of claims 1 to 3,
wherein the road surface illuminance at the position at the second forward distance is approximately constant within a range of ±5% to ±10%.

5. The vehicle lamp control apparatus according to any one of claims 1 to 4,
wherein the second value of the road surface illuminance is a value of 50% or more and 70% or less on the basis of the first value.

6. The vehicle lamp control apparatus according to any one of claims 1 to 5,
wherein the third value of the road surface illuminance is a value of 30% or more and 40% or less on the basis of the first value.

7. The vehicle lamp control apparatus according to any one of claims 1 to 6,
wherein the first forward distance is set within a range of 10 m to 15 m and the second forward distance is set within a range of 60 m to 80 m.

8. The vehicle lamp control apparatus according to any one of claims 1 to 7,
wherein the first reference value is set to 20 km/h and the second reference value is set to 60 km/h.

9. (Amended) A vehicle lamp control method that controls light irradiation state of a vehicle lamp which is capable of irradiating light forward of a vehicle,
wherein the vehicle lamp control method comprises:
with regard to irradiation light lower than an H line on a virtual screen,
(a) when a vehicle speed of the vehicle is lower than or equal to a reference value, setting brightness of a light of the vehicle lamp such that a road surface illuminance due to light from the vehicle lamp at a position at a first forward distance which is relatively close to the vehicle becomes a first value;
(b) when the vehicle speed of the vehicle is greater than the reference value, setting brightness of the light of the vehicle lamp such that the road surface illuminance due to light from the vehicle lamp at the position at the first forward distance becomes a second value which is smaller than the first value; and
(c) setting brightness of the light of the vehicle lamp such that the road surface illuminance due to light from the vehicle lamp at a position at a second forward distance which is relatively far from the vehicle becomes substantially constant regardless of the vehicle speed.

10. A vehicle lamp system that comprises the control apparatus according to any one of claims 1 to 8 and a vehicle lamp connected to the control apparatus.
